# EUROPÄISCHE PATENTSCHRIFT

(11) **EP 2 226 211 B1**
(45) Veröffentlichungstag und Bekanntmachung des Hinweises auf die Patenterteilung: **12.10.2011**
(21) Anmeldenummer: 10155594.4
(22) Anmeldetag: 05.03.2010
(51) Int. Cl.: B60K 1/00, B60K 1/02, B60K 17/16, B60K 7/00, H02K 7/116

(54) **Antriebsvorrichtung für ein Elektrofahrzeug**
Drive device for an electric vehicle
Dispositif de propulsion pour un véhicule électrique

(30) Priorität: 07.03.2009 DE 102009012256
(43) Veröffentlichungstag der Anmeldung: 08.09.2010
(73) Patentinhaber: Schaeffler Technologies GmbH & Co. KG, 91074 Herzogenaurach (DE)
(72) Erfinder: Biermann, Thorsten, 96172, Mühlhausen (DE); Bogner, Michael, 90542, Eckental (DE)

(56) Entgegenhaltungen:
- EP-A1- 1 000 829
- DE-A1- 4 334 590
- DE-A1- 10 350 862
- DE-A1-102004 026 040
- DE-A1-102005 055 690
- DE-A1-102006 025 058
- DE-C1- 19 860 618

## Beschreibung

Die Erfindung betrifft eine Antriebsvorrichtung für ein elektromotorisch betriebenes Fahrzeug mit einem Elektromotor und einem Differentialgetriebe.

Die Bestrebungen, Elektromotoren im Automobilbau für den Antrieb einzusetzen, werden u.a. aufgrund steigender Rohstoffpreise und des wachsenden Umweltbewusstseins in jüngerer Zeit verstärkt. Der Elektroantrieb ist dem Antrieb eines Verbrennungsmotors in vielen Eigenschaften überlegen. Dazu zählen beispielsweise der hohe Wirkungsgrad, der einfachere Aufbau des Antriebsstrangs und der breite Drehzahlbereich, in dem ein gleichmäßiges Drehmoment stufenlos vorhanden ist, so dass weder ein manuell betätigtes Schaltgetriebe noch ein Automatikgetriebe oder eine Kupplung erforderlich sind.

Seit einiger Zeit experimentieren diverse Hersteller mit Radnaben-Motoren. An den Antriebsachsen sind die Räder mit je einem eigenen Motor ausgestattet und die Antriebskraft wird so direkt am Rad erzeugt. Bei dieser Art des Antriebes entfallen beispielsweise der "Motorraum" und viele Teile des konventionellen Antriebsstranges. Radnabenantriebe werden nach dem Stand der Technik üblicherweise bei Flurförderfahrzeugen und Omnibussen eingesetzt. Neben dem Elektromotor als Wärmequelle erzeugen aber auch Lager und Verzahnungen eine hohe Wärmemenge, da sie auf engstem Raum angeordnet sind. Außerdem erweisen sich die Bremsen bzw. die Bremsscheiben als eine typische zusätzliche Wärmequelle. Demnach kommt es öfters zu Situationen, bei denen die entwickelte Wärme aufgrund der kompakten Bauweise nicht vollständig an die Umgebung abgegeben werden kann, so dass Probleme entstehen, welche die Funktion und Lebensdauer eines Radnabenantriebs negativ beeinflussen. Ein weiterer Nachteil des Radnabenantriebes ist sein hoher Preis, sodass dieses Antriebskonzept bislang nur in Prototypen sowie Sondermodellen verwendet wird.

In der DE 103 50 862 A1, welche den nächstliegenden Stand der Technik bildet, ist ein Kraftübertragungssystem für ein elektrisches Fahrzeug mit einem bürstenlosen Gleichstrommotor und einem Differentialgetriebe beschrieben. Das Differentialgetriebe besteht aus zwei Übertragungswellen und einem Kegelradsatz, dessen beide Enden jeweils mit zwei Übertragungswellen verbunden sind. Der Rotor des Gleichstrommotors ist um das Differentialgetriebe herum positioniert und um den Rotor herum ist ein Stator positioniert. Die Drehung des Gleichstrommotors wird direkt über das Differentialgetriebe zu den Rädern eines Elektrofahrzeugs übertragen, ohne dass ein Untersetzungsgetriebesatz benötigt wird. Ähnliche Systeme können auch der DE 10 2004 026 040 A1. DE 43 34 590 A1, DE 198 60 618 C1 sowie EP 1 000 829 A1 entnommen werden.

Der vorliegenden Erfindung liegt die Aufgabe zugrunde, eine verbesserte elektromotorische Antriebsvorrichtung für Fahrzeuge bereitzustellen, die eine verbesserte Alternative zu bekannten Lösungen darstellt und die Nachteile des Standes der Technik vermeidet.

Die genannte Aufgabe wird durch eine Antriebsvorrichtung gemäß dem beigefügten Anspruch 1 gelöst.

Eine erfindungsgemäße Antriebsvorrichtung für ein elektromotorisch betriebenes Fahrzeug weist einen Elektromotor und ein Differentialgetriebe auf, wobei das Differentialgetriebe eine erste Abtriebswelle, eine zweite Abtriebswelle und einen Differentialkorb mit mehreren Getrieberädern umfasst. Das Differentialgetriebe ist erfindungsgemäß in den Elektromotor integriert, wobei der Rotor drehfest mit dem Differentialkorb verbunden ist.

Die erfindungsgemäße Antriebsvorrichtung zeichnet sich insbesondere dadurch aus, dass sie mindestens eine Überlagerungsstufe aufweist, welche an der ersten und/oder an der zweiten Abtriebswelle des Differentialgetriebes angeordnet ist. Die Überlagerungsstufe umfasst mindestens einen Überlagerungs-Elektromotor und ein Getriebe, welche eine variable Steuerung der Drehzahlen der ersten und/oder der zweiten Abtriebswelle gestatten.

Ein wesentlicher Vorteil der erfindungsgemäßen Antriebsvorrichtung besteht darin, dass durch den Antrieb mittels Überlagerungs-Elektromotor eine Überlagerung stattfindet, welche die Drehzahl vom Elektromotor auf die Drehzahl der vom Differenzialgetriebe abgehenden Abtriebswelle überlagert. Somit kann eine variable Steuerung der Drehzahlen der Abtriebswellen erfolgen. Die Überlagerungsstufe wird vorzugsweise pro Abtriebswelle angebracht.

Es liegt aber ebenso im Rahmen der Erfindung, dass die Überlagerungsstufe auf nur einer der zwei Abtriebswellen angeordnet ist. Dies kann nur realisiert werden, wenn der Elektromotor auch negative Momente aufbringen kann.

Der Elektromotor für die Überlagerungsstufe kann wesentlich kleiner dimensioniert werden als der Hauptantrieb für das Differentialgetriebe, da zur Erhöhung der Fahrstabilität geringere Drehmomente einzubringen sind.

In einer besonders bevorzugten Ausführungsform der Erfindung ist der Elektromotor ein Ringmotor, dessen Gehäuse den Stator bildet und den Rotor dabei umgibt. Der Rotor selbst ist als Differentialkorb ausgebildet und wird durch die vom Stator generierten elektromagnetischen Kräfte um eine Drehachse angetrieben. Das durch den Elektromotor erzeugte Drehmoment wird somit unmittelbar in den Differentialkorb eingeleitet und auf zwei Abtriebswellen verteilt, wodurch auf die Räder des Elektrofahrzeugs immer die gleiche Kraft übertragen wird.

In anderen Ausführungsformen kann der Elektromotor auch als ein Synchron-, Asynchron- oder als ein Scheibenläufermotor ausgelegt sein.

In einer weiteren bevorzugten Ausführungsform der Erfindung ist das Differentialgetriebe ein Kegelraddifferential. Die Kraft- bzw. Drehmomentübertragung erfolgt durch Kegelräder, welche auf der Innenseite des Differentialkorbs drehbar gelagert sind. Die Kegelräder sind dabei mindestens ein Ausgleichsrad und zwei Seitenräder. Die Seitenräder sind jeweils mit den an die Fahrzeugräder gekoppelten Abtriebswellen drehfest verbunden und in der Ebene der Drehachse im Differentialkorb gelagert. Über die Seitenräder werden die Drehmomente an die Abtriebswellen und damit an die Räder des Elektrofahrzeugs weitergegeben. Die Ausgleichsräder sind über je einen Zapfen mit dem Differentialkorb verbunden und gemeinsam umlaufen sie die Drehachse, wobei die Ausgleichsräder mit den Seitenrädern in Eingriff stehen. Dabei ist die Drehzahl auf beiden Abtriebswellen gleich groß. Erst bei einer Kurvenfahrt tritt an den Abtriebswellen eine Differenzdrehzahl auf, die bewirkt, dass die Ausgleichsräder sich um ihre eigenen Achsen drehen.

Ein Vorteil dieses Antriebskonzepts ist, dass ein verhältnismäßig hohes Drehmoment vom Differentialkorb auf die Seitenräder übertragen werden kann und dass eine hohe Verdrehfestigkeit im Differentialgetriebe vorhanden ist.

Eine weitere Möglichkeit für eine Drehmomentverteilung in einem Antriebstrang eines Elektrofahrzeuges ist der Einsatz eines Differentialgetriebes, welches als Stirnraddifferential ausgelegt ist. Das Differentialgetriebe umfasst hier wiederum den um die Drehachse drehbar gelagerten, antreibbaren Differentialkorb sowie ein erstes Seitenrad und ein zweites Seitenrad, die koaxial zu der Drehachse im Differentialkorb drehbar gelagert sind. Die Seitenräder sind je mit einer Abtriebswelle drehfest verbunden. Des Weiteren umfasst das Differentialgetriebe mehrere Ausgleichsräder die auf zwei Längsachsen gelagert sind und gemeinsam mit dem Differentialkorb die Drehachse umlaufen. Die Längsachsen der Ausgleichsräder verlaufen parallel zu der Drehachse und umlaufen diese auf einer Kreisbahn. Dabei sind die Ausgleichsräder paarweise so auf der Längsachse angeordnet, dass das erste Ausgleichsrad aus dem ersten Paar mit dem ersten Seitenrad kämmt und das zweite Ausgleichsrad aus dem ersten Paar mit dem zweiten Seitenrad kämmt, dabei kämmen sich die Ausgleichsräder aus dem ersten Paar untereinander. Diese Anordnung wiederholt sich auch für das zweite Paar der Ausgleichsräder.

Bei einem Stirnraddifferenzial wird, wie auch bei einem Kegelraddifferential, die entstandene Differenzdrehzahl zwischen den beiden Abtriebswellen durch die Ausgleichsräder ausgeglichen.

Um eine Kurvenfahrt eines Fahrzeuges zu unterstützen, können zusätzlich elektronisch gesteuerte Systeme eingesetzt werden, die die Aufgabe haben, gezielt die Antriebsmomente unterschiedlich auf die Räder zu verteilen. Solche Systeme sind unter den Begriffen "Active Yaw" oder "Torque Vectoring" bekannt, wobei sie nicht mit der Aktivlenkung, Allradlenkung oder der aktiven Hinterachsenkinematik zu verwechseln sind, da ihre Wirkung nur auf dem kontrollierten Umverteilen der Antriebsmomente beruht und nicht auf der Änderung der Radstellung.

Bei einer vorteilhaften Ausführungsform ist das Getriebe der Überlagerungsstufe ein Taumelscheibengetriebe, das zwei Begrenzungsringe und eine verzahnte Taumelscheibe umfasst, welche zwischen den beiden Begrenzungsringen frei drehend angeordnet ist. Dabei ist auf den sich gegenüberliegenden Seiten der Begrenzungsringene jeweils im Randbereich ein ringförmiger Zahnkranz vorhanden, welcher auf der Stirnfläche als konvexes Kegelrad ausgebildet ist. Die Taumelscheibe besitzt auf beiden Seiten einen ringförmigen Zahnkranz, welcher sich im Randbereich ausbreitet und als konkaves Kegelrad ausgebildet ist. Dabei ist sie so angeordnet, dass je zwei gegenüberliegende Zahnkränze der Taumelscheibe und der Begrenzungsringe an einem Wälzpunkt in Eingriff stehen. Mittels Kugellager steht die Taumelscheibe mit dem Rotor des Elektromotors in Verbindung. Die Begrenzungsringe der ersten Überlagerungsstufe sind mit der ersten Abtriebswelle des Differentialgetriebes verbunden. Bei einer Einleitung einer Drehbewegung über die Taumelscheibe erfolgt eine Überlagerung der Drehzahlen der Abtriebswelle.

Ein Vorteil eines solchen Getriebes ist, dass es geräuscharm arbeitet und dass große Drehmomente und hohe Übersetzungen bei geringem Bauvolumen realisierbar sind.

Selbstverständlich liegt es auch im Rahmen der Erfindung, die Überlagerungsstufe mit anderen Getriebearten, wie Wellengetriebe, harmonic drives o.ä. zu gestalten.

Bevorzugte Ausführungsformen der erfindungsgemäßen Antriebsvorrichtung sind in den Figuren dargestellt und werden nachfolgend näher erläutert.

Es zeigen:
- Fig. 1: eine schematische Darstellung einer Antriebsvorrichtung für ein Elektrofahrzeug mit einem Kegel- raddifferential;
- Fig. 2: eine schematische Darstellung einer Antriebsvorrichtung für ein Elektrofahrzeug mit einem Stirn raddifferential;
- Fig. 3: eine schematische Darstellung einer Ausführungsform einer Antriebsvorrichtung für ein Elektrofahrzeug mit einer Über- lagerungsstufe entsprechend der Erfindung.

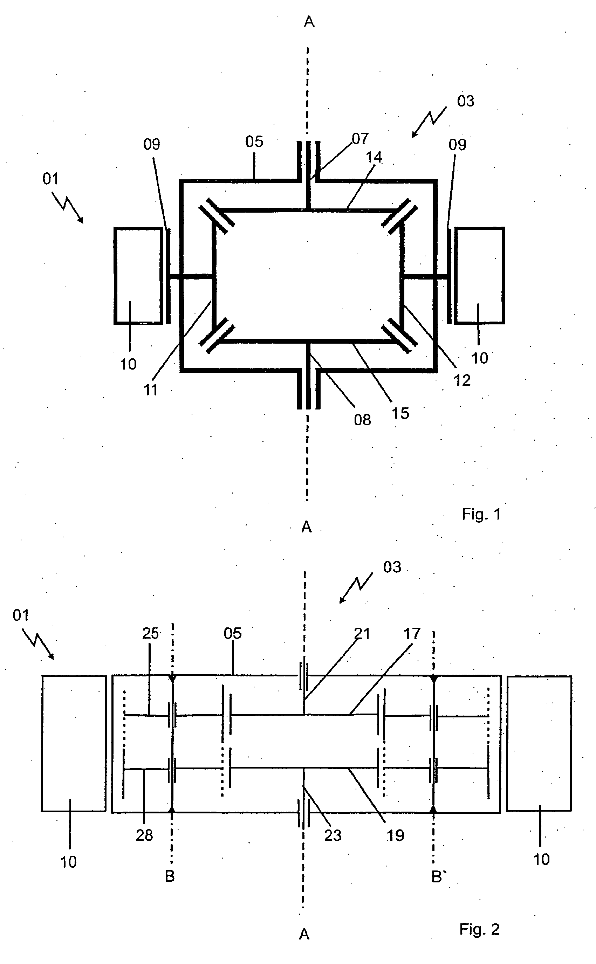

Fig. 1 zeigt eine schematische Darstellung einer Antriebsvorrichtung mit einem Elektromotor 01 und einem Differentialgetriebe 03. Das Differentialgetriebe 03 umfasst einen Differentialkorb 05 mit mehreren Getrieberädern, einer ersten gelagerten Abtriebswelle 07 und einer zweiten gelagerten Abtriebswelle 08. Das Differentialgetriebe 03 ist in den Elektromotor 01 mit einem Rotor 09 und einem Stator 10 integriert, wobei der Rotor 09 mit dem Differentialkorb 05 verbunden ist. Der Stator 10 umgibt den Rotor 09 und treibt diesen gemeinsam mit dem Differentialkorb 05 um eine Drehachse A an.

Die Kraftübertragung erfolgt durch die Getrieberäder, die in der dargestellten Ausführungsform als Kegelräder ausgelegt sind und die auf der Innenseite des Differentialkorbs 05 drehbar gelagert sind. Die Kegelräder sind zwei Ausgleichsräder 11, 12 und zwei Seitenräder 14, 15. Dabei sind das erste Seitenrad 14 mit der ersten Abtriebswelle 07 und das zweite Seitenrad 15 mit der zweiten Abtriebswelle 08 drehfest verbunden. Die Abtriebswellen 07, 08 verlaufen koaxial zur Drehachse A, um welche der Differentialkorb 05 drehbar gelagert ist. Die Ausgleichsräder 11, 12 sind über je einen Zapfen mit dem Differentialkorb 05 verbunden und in diesem drehbar gelagert und gemeinsam umlaufen sie die Drehachse A, wobei sie mit dem Seitenrädern 14, 15 in Eingriff sind.

Fig. 2 zeigt eine schematische Darstellung der Antriebsvorrichtung mit den prinzipiell in Bezug auf Fig. 1 bereits beschriebenen Merkmalen. Der wesentliche Unterschied zu der oben beschriebenen Antriebsvorrichtung liegt darin, dass das Differentialgetriebe 03 ein Stirnraddifferential ist.

Das Stirnraddifferential umfasst ein erstes Seitenrad 17 und ein zweites Seitenrad 19, die koaxial zu der Drehachse A im Differentialkorb 05 drehbar gelagert sind. Die Seitenräder 17, 19 sind je mit einer Abtriebswelle 21, 23 drehfest verbunden. Des Weiteren umfasst das Differentialgetriebe 03 mehrere Ausgleichsräder 25, 28, die gemeinsam mit dem Differentialkorb 05 die Drehachse A umlaufen. Die Längsachsen B, B' der Ausgleichsräder befinden sich parallel auf beiden Seiten zur Drehachse A und umlaufen die Drehachse A auf einer Kreisbahn.

Dabei sind die Ausgleichsräder 25, 28 paarweise so angeordnet, dass das erste Ausgleichsrad 25 aus dem ersten Paar mit dem ersten Seitenrad 17 kämmt und das zweite Ausgleichsrad 28 aus dem ersten Paar mit dem zweiten Seitenrad 19 kämmt. Gleichzeitig kämmen sich die Ausgleichsräder 25, 28 aus dem ersten Paar untereinander, wie dies mit der punktierten Linie angedeutet ist. Diese Anordnung wiederholt sich auch für das zweite Paar der Ausgleichsräder, welches auf der gegenüberliegenden Seite der Drehachse A angeordnet ist.

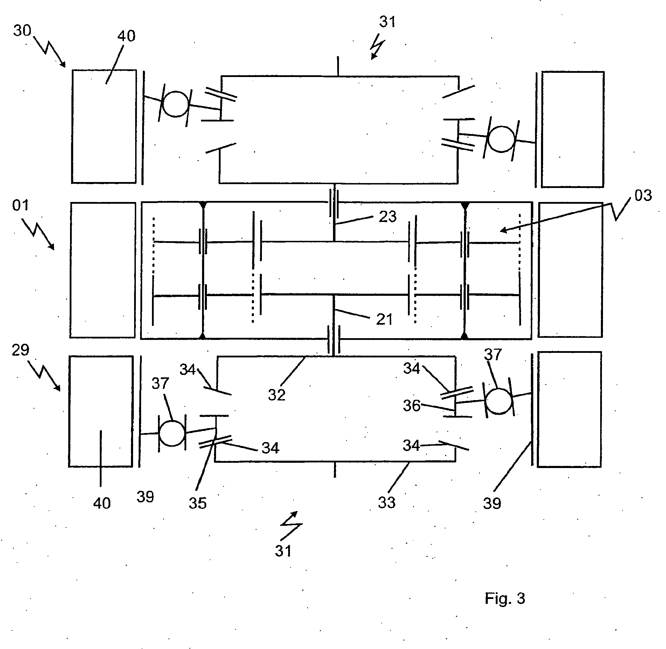

Fig. 3 zeigt eine schematische Darstellung einer bevorzugten Ausführungsform der Antriebsvorrichtung entsprechend der Erfindung, welche wiederum die wichtigsten Merkmale der in Fig. 2 dargestellten Antriebsvorrichtung aufweist. Der wesentliche Unterschied ist hier die Zuschaltung von je einer Überlagerungsstufe 29, 30 auf die Abtriebswellen 21, 23. Die Überlagerungsstufen 29, 30 sind gleichartig aufgebaut und umfassen jeweils einen Überlagerungs-Elektromotor 40 und ein Getriebe, welches z.B. ein Taumelscheibengetriebe 31 ist.

Das Taumelscheibengetriebe 31 umfasst zwei Begrenzungsringe 32, 33 und eine verzahnte Taumelscheibe 35, welche zwischen den beiden Begrenzungsringen 32, 33 frei drehend angeordnet ist. Dabei ist auf den sich gegenüberliegenden Seiten der Begrenzungsringe 32, 33 jeweils im Randbereich ein erster ringförmiger Zahnkranz 34 vorhanden, welcher auf der Stirnfläche als konvexes Kegelrad ausgebildet ist.

Die Taumelscheibe 35 weist auf beiden Seiten einen zweiten ringförmigen Zahnkranz 36 auf, welcher sich im Randbereich ausbreitet und als konkaves Kegelrad ausgebildet ist. Sie ist so angeordnet, dass je zwei gegenüberliegende Zahnkränze 34, 36 der Taumelscheibe 35 und der Begrenzungsringe 32, 33 an einem Wälzpunkt in Eingriff stehen.

Mittels Kugellagern 37 steht die Taumelscheibe 35 mit dem Rotor 39 des Überlagerungs-Elektromotors 40 in Verbindung. Die Begrenzungsringe 32, 33 der ersten Überlagerungsstufe 29 sind mit der ersten Abtriebswelle 21 des Differentialgetriebes 03 verbunden.

Die zweite Überlagerungsstufe 30 ist an der zweiten Abtriebswelle 23 des Differentalgetriebes 03 angeordnet und umfasst die zuvor beschriebenen Teile der Überlagerungsstufe analog.

### Bezugszeichen liste

- 01: Elektromotor
- 03: Differentialgetriebe
- 05: Differentialkorb
- 07: erste Abtriebswelle des Kegelraddifferentials
- 08: zweite Abtriebswelle des Kegelraddifferentials
- 09: Rotor
- 10: Stator
- 11: Ausgleichsrad
- 12: Ausgleichsrad
- 14: erstes Seitenrad des Kegelraddifferentials
- 15: zweites Seitenrad des Kegelraddifferentials
- 17: erstes Seitenrad des Stirnraddifferentials
- 19: zweites Seitenrad des Stirnraddifferentials
- 21: erste Abtriebswelle des Stirnraddifferentials
- 23: zweite Abtriebswelle des Stirnraddifferentials
- 25: erstes Ausgleichsrad
- 28: zweites Ausgleichsrad
- 29: erste Überlagerungsstufe
- 30: zweite Überlagerungsstufe
- 31: Taumelscheibengetriebe
- 32: Begrenzungsring
- 33: Begrenzungsring
- 34: erster Zahnkranz
- 35: Taumelscheibe
- 36: zweiter Zahnkranz
- 37: Kugellager
- 39: Rotor des Überlagerungs-Elektromotors
- 40: Überlagerungs-Elektromotor

## Patentansprüche

1. Antriebsvorrichtung für ein elektromotorisch betriebenes Fahrzeug, umfassend einen Elektromotor (01) mit einem Rotor (09) und einem Stator (10) sowie ein Differentialgetriebe (03) mit einer ersten drehbar gelagerten Abtriebswelle (07; 21), einer zweiten drehbar gelagerten Abtriebswelle (08; 23) und einem Differentialkorb (05), welcher mehrere Getrieberäder aufweist, über welche die beiden Abtriebswellen (07, 08; 21, 23) angetrieben werden, wobei das Differentialgetriebe (03) in dem Elektromotor (01) integriert ist, und wobei der Rotor (09) drehfest mit dem Differentialkorb (05) verbunden ist, **dadurch gekennzeichnet, dass** die Antriebsvorrichtung weiterhin mindestens eine Überlagerungsstufe (29, 30) aufweist, welche an der ersten und/oder an der zweiten Abtriebswelle (21, 23) des Differentialgetriebes (03) angeordnet ist, die mindestens einen Überlagerungs-Elektromotor (40) und ein Getriebe umfasst, welche eine variable Steuerung der Drehzahlen der ersten und/oder der zweiten Abtriebswelle (21, 23) gestatten.

2. Antriebsvorrichtung nach Anspruch 1, **dadurch gekennzeichnet, dass** der Elektromotor (01) ein Ringmotor ist, dessen Gehäuse den Stator (10) bildet, welcher den Rotor (09) umgibt.

3. Antriebsvorrichtung nach Anspruch 1, **dadurch gekennzeichnet, dass** der Elektromotor (01) ein Synchron-, Asynchron- oder Scheibenläufermotor ist.

4. Antriebsvorrichtung nach einem der Ansprüche 1 bis 3, **dadurch gekennzeichnet, dass** der Differentialkorb (05) den Rotor (09) bildet, welcher von dem ihn umgebenden Stator (10) angetrieben wird.

5. Antriebsvorrichtung nach einem der Ansprüche 1 bis 4, **dadurch gekennzeichnet, dass** das Differentialgetriebe (03) ein Kegelraddifferential ist, wobei die Getrieberäder mindestens ein drehbar am Differentialkorb (05) gelagerten Ausgleichsrad (11, 12) und zwei die Abtriebswellen (07, 08) antreibende Seitenräder (14, 15) umfassen.

6. Antriebsvorrichtung nach einem der Ansprüche 1 bis 4, **dadurch gekennzeichnet, dass** das Differentialgetriebe (03) ein Stirnraddifferential ist und die Getrieberäder Stirnräder (17, 19, 25, 28) sind.

7. Antriebsvorrichtung nach Anspruch 6, **dadurch gekennzeichnet, dass** das Stirnraddifferential ein erstes Seitenrad (17) und ein zweites Seitenrad (19) umfasst, welche koaxial zur Drehachse des Differentialkorbs (05) drehbar gelagert und drehfest mit je einer der Abtriebswellen (21, 23) verbunden sind.

8. Antriebsvorrichtung nach Anspruch 7, **dadurch gekennzeichnet, dass** das Stirnraddifferential weiterhin mehrere Ausgleichsräder (25, 28) umfasst, welche die Drehachse des Differentialkorbs (05) kreisförmig umlaufen.

9. Antriebsvorrichtung nach einem der Ansprüche 1 bis 8, **dadurch gekennzeichnet, dass** das Getriebe der Überlagerungsstufe (29, 30) ein Taumelscheibengetriebe (31) ist, dessen Antriebswelle vom Überlagerungs-Elektromotor (40) angetrieben wird und dessen Abtriebswelle mit der vom Differentialgetriebe (03) abgehende ersten und/oder zweiten Abtriebswelle (21, 23) drehzahlüberlagernd gekoppelt ist.

10. Antriebsvorrichtung nach einem der Ansprüche 1 bis 8, **dadurch gekennzeichnet, dass** das Getriebe der Überlagerungsstufe (29, 30) ein Wellengetriebe oder ein Harmonic Drive ist.

11. Antriebsvorrichtung nach einem der Ansprüche 1 bis 10, **dadurch gekennzeichnet, dass** die beiden Abtriebswellen (07, 08; 21, 23) des Differentialgetriebes koaxial mit der Drehachse des Differentialkorbs (05) ausgerichtet sind.

## Claims

1. Drive apparatus for an electromotively operated vehicle, comprising an electric motor (01) having a rotor (09) and a stator (10) and also a differential gear mechanism (03) having a first rotatably mounted output shaft (07; 21), a second rotatably mounted output shaft (08; 23) and a differential cage (05) which has a plurality of gear wheels by means of which the two output shafts (07, 08; 21, 23) are driven, with the differential gear mechanism (03) being integrated in the electric motor (01), and with the rotor (09) being connected to the differential cage (05) in a rotationally fixed manner, **characterized in that** the drive apparatus also has at least one superimposition stage (29, 30) which is arranged on the first and/or on the second output shaft (21, 23) of the differential gear mechanism (03) and comprises at least one superimposition electric motor (40) and one gear mechanism which allow variable control of the rotation speeds of the first and/or of the second output shaft (21, 23).

2. Drive apparatus according to Claim 1, **characterized in that** the electric motor (01) is a ring motor, the housing of the said ring motor forming the stator (10) which surrounds the rotor (09).

3. Drive apparatus according to Claim 1, **characterized in that** the electric motor (01) is a synchronous motor, an asynchronous motor or a disc-rotor motor.

4. Drive apparatus according to one of Claims 1 to 3, **characterized in that** the differential cage (05) forms the rotor (09) which is driven by the stator (10) which surrounds it.

5. Drive apparatus according to one of Claims 1 to 4, **characterized in that** the differential gear mechanism (03) is a bevel gear differential, with the gear wheels comprising at least one compensation gear (11, 12), which is mounted on the differential cage (05) in a rotatable manner, and two side gears (14, 15), which drive the output shafts (07, 08).

6. Drive apparatus according to one of Claims 1 to 4, **characterized in that** the differential gear mechanism (03) is a spur gear differential and the gear wheels are spur gears (17, 19, 25, 28).

7. Drive apparatus according to Claim 6, **characterized in that** the spur gear differential comprises a first side gear (17) and a second side gear (19), the said side gears being rotatably mounted coaxially to the rotation axis of the differential cage (05) and being connected to in each case one of the output shafts (21, 23) in a rotationally fixed manner.

8. Drive apparatus according to Claim 7, **characterized in that** the spur gear differential also comprises a plurality of compensation gears (25, 28) which revolve around the rotation axis of the differential cage (05) in a circular manner.

9. Drive apparatus according to one of Claims 1 to 8, **characterized in that** the gear mechanism of the superimposition stage (29, 30) is a swash-plate mechanism (31), the drive shaft of the said swash-plate mechanism being driven by the superimposition electric motor (40), and the output shaft of the said swash-plate mechanism being coupled, so as to superimpose the rotation speed, to the first and/or second output shaft (21, 23), which starts at the differential gear mechanism (03).

10. Drive apparatus according to one of Claims 1 to 8, **characterized in that** the gear mechanism of the superimposition stage (29, 30) is a strain wave gear mechanism or a harmonic drive.

11. Drive apparatus according to one of Claims 1 to 10, **characterized in that** the two output shafts (07, 08; 21, 23) of the differential gear mechanism are oriented coaxially to the rotation axis of the differential cage (05).

## Revendications

1. Dispositif de propulsion pour un véhicule entraîné de façon électromotorisée, comprenant un moteur électrique (01) équipé d'un rotor (09) et d'un stator (10) ainsi qu'une boîte de vitesses différentielle (03) équipée d'un premier arbre d'entraînement en sortie (07 ; 21) disposé de façon à pouvoir pivoter, d'un deuxième arbre d'entraînement en sortie (08 ; 23) disposé de façon à pouvoir pivoter et d'une cage de différentiel (05) comportant plusieurs roues d'engrenage via lesquelles les deux arbres d'entraînement en sortie (07, 08 ; 21, 23) sont entraînés, la boîte de vitesses différentielle (03) étant intégrée dans le moteur électrique (01) et le rotor (09) étant relié solidairement en rotation à la cage de différentiel (05), **caractérisé en ce que** le dispositif de propulsion comporte en outre au moins un étage de superposition (29, 30) disposé au niveau du premier et/ou du deuxième arbre d'entraînement en sortie (21, 23) de la boîte de vitesses différentielle (03) qui comprend au moins un moteur électrique de superposition (40) et une boîte de vitesses constituant ensemble un élément de commande variable des vitesses de rotation du premier et/ou du deuxième arbre d'entraînement en sortie (21, 23).

2. Dispositif de propulsion selon la revendication 1, **caractérisé en ce que** le moteur électrique (01) est un moteur à bagues dont le carter forme le stator (10) entourant le rotor (09).

3. Dispositif de propulsion selon la revendication 1, **caractérisé en ce que** le moteur électrique (01) est un moteur synchrone, asynchrone ou à disques.

4. Dispositif de propulsion selon l'une quelconque des revendications 1 à 3, **caractérisé en ce que** la cage de différentiel (05) forme le rotor (09) entraîné par le stator (10) l'entourant.

5. Dispositif de propulsion selon l'une quelconque des revendications 1 à 4, **caractérisé en ce que** la boîte de vitesses différentielle (03) est un différentiel de roue conique, les roues d'engrenage comportant au moins une roue d'équilibrage (11, 12) disposée de façon à pouvoir tourner au niveau de la cage de différentiel (05) et deux roues latérales (14, 15) entraînant en rotation les arbres d'entraînement en sortie (07, 08).

6. Dispositif de propulsion selon l'une quelconque des revendications 1 à 4, **caractérisé en ce que** la boîte de vitesses différentielle (03) est un différentiel de roue frontale et que les roues d'engrenage sont des roues frontales (17, 19, 25, 28).

7. Dispositif de propulsion selon la revendication 6, **caractérisé en ce que** le différentiel de roue frontale comprend une première roue latérale (17) et une deuxième roue latérale (19) disposées de façon à pouvoir tourner coaxialement par rapport à l'axe de rotation de la cage de différentiel (05) et reliées solidairement en rotation avec respectivement un des arbres d'entraînement en sortie (21, 23).

8. Dispositif de propulsion selon la revendication 7, **caractérisé en ce que** le différentiel de roue frontale comprend en outre plusieurs roues d'équilibrage (25, 28) tournant autour de l'axe de rotation de la cage de différentiel (05) en suivant la forme d'un cercle.

9. Dispositif de propulsion selon l'une quelconque des revendications 1 à 8, **caractérisé en ce que** la boîte de vitesses de l'étage de superposition (29, 30) est une boîte de vitesses à disque oscillant (31) dont l'arbre d'entraînement en entrée est entraîné par le moteur électrique de superposition (40) et dont l'arbre d'entraînement en sortie est couplé par chevauchement de la vitesse de rotation au premier et/ou au deuxième arbre d'entraînement en sortie (21, 23) sortant de la boîte de vitesses différentielle (03).

10. Dispositif de propulsion selon l'une quelconque des revendications 1 à 8, **caractérisé en ce que** la boîte de vitesses de l'étage de superposition (29, 30) est une boîte de vitesses à arbres ou une boîte de vitesses à démultiplicateur harmonique.

11. Dispositif de propulsion selon l'une quelconque des revendications 1 à 10, **caractérisé en ce que** les deux arbres d'entraînement en sortie (07, 08 ; 21, 23) de la boîte de vitesses différentielle sont alignés coaxialement avec l'axe de rotation de la cage de différentiel (05).
